(19) Europäisches Patentamt
European Patent Office
Office européen des brevets

(11) **EP 4 760 586 A1**

(12) **EUROPEAN PATENT APPLICATION**

(43) Date of publication:
**17.06.2026 Bulletin 2026/25**

(21) Application number: **25214056.1**

(22) Date of filing: **06.11.2025**

(51) International Patent Classification (IPC):
**G06F 40/284** $^{(2020.01)}$    **G06F 40/30** $^{(2020.01)}$
**G06N 3/08** $^{(2023.01)}$

(52) Cooperative Patent Classification (CPC):
**G06F 40/284; G06F 40/30; G06N 3/044;
G06N 3/045; G06N 3/08; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **11.12.2024  US 202463730898 P
04.07.2025  US 202519260361
04.07.2025  US 202519260365**

(71) Applicant: **Rakuten Group, Inc.
Setagaya-ku
Tokyo 158-0094 (JP)**

(72) Inventors:
• **XIONG, Lee
San Mateo, CA, 94402 (US)**
• **TKACHENKO, Maksim
048946 CapitaGreen (SG)**
• **THE, Johanes Effendi
048946 CapitaGreen (SG)**
• **CAI, Ting
158-0094 Setagaya-ku, Tokyo (JP)**

(74) Representative: **Hoffmann Eitle
Patent- und Rechtsanwälte PartmbB
Arabellastraße 30
81925 München (DE)**

(54) **LANGUAGE MODELLING WITH FACTORIZATION MEMORY**

(57)    Language modelling with factorization memory is performed by calculating a topic affinity score for each topic vector based on an input token embedding and a topic affinity weight matrix, updating each topic vector based on a corresponding topic affinity score, and merging the updated topic vectors to produce an output token embedding.

FIG. 1

## Description

### CROSS-REFERENCE TO RELATED APPLICATIONS

This application claims priority to U.S. Provisional Patent Application Serial No. 63/730,898, filed on December 11, 2024, U.S Non-Provisional Patent Application Serial No. 19/260,365, filed on July 4, 2025, and U.S Non-Provisional Patent Application Serial No. 19/260,361, filed on July 4, 2025 the entire contents of which are incorporated herein by reference.

### FIELD

The present disclosure relates to language modelling with factorization memory.

### BACKGROUND

The information disclosed in this background section is only for enhancement of understanding of the general background of the disclosure and should not be taken as an acknowledgement or any form of suggestion that this information forms the prior art already known to a person skilled in the art.

Transformer architecture in Large Language Models (LLMs) uses a context window to consider the previous $L$ tokens when producing the next 1 token. To produce a sentence of $L$ tokens, you need $O(L^2)$ computations.

### SUMMARY

In at least some embodiments, language modelling with factorization memory is performed by a method of operations comprising calculating a topic affinity score for each topic vector among a plurality of topic vectors based on an input token embedding and a topic affinity weight matrix, updating each topic vector among at least some of the plurality of topic vectors based on a corresponding topic affinity score, and merging the updated at least some of the plurality of topic vectors to produce an output token embedding.

In at least some embodiments, language modelling with factorization memory is performed by an apparatus configured to perform operations comprising calculating a topic affinity score for each topic vector among a plurality of topic vectors based on an input token embedding and a topic affinity weight matrix, updating each topic vector among at least some of the plurality of topic vectors based on a corresponding topic affinity score, and merging the updated at least some of the plurality of topic vectors to produce an output token embedding.

In at least some embodiments, language modelling with factorization memory is performed by a non-transitory computer-readable medium including instructions that, in response to execution by one or more processors, causes performance of operations comprising calculating a topic affinity score for each topic vector among a plurality of topic vectors based on an input token embedding and a topic affinity weight matrix, updating each topic vector among at least some of the plurality of topic vectors based on a corresponding topic affinity score, and merging the updated at least some of the plurality of topic vectors to produce an output token embedding.

### BRIEF DESCRIPTION OF THE DRAWINGS

Features, aspects, and advantages of embodiments of the disclosure will be described below with reference to the accompanying drawings, in which like reference numerals denote like elements, and wherein:

FIG. 1 is a schematic diagram of a factorization memory block of a language model, according to at least some embodiments of the subject disclosure.
FIG. 2 is an operational flow for utilizing a recurrent memory state, according to at least some embodiments of the subject disclosure.
FIG. 3 is an operational flow for updating topic vectors, according to at least some embodiments of the subject disclosure.
FIG. 4 is an operational flow for merging updated topic vectors, according to at least some embodiments of the subject disclosure.
FIG. 5 is a schematic diagram of a language model with factorization memory, according to at least some embodiments of the subject disclosure.
FIG. 6 is an operational flow for assembling and training a language model with factorization memory, according to at least some embodiments of the subject disclosure.
FIG. 7 illustrates an embodiment of an apparatus for language modelling with factorization memory, according to at least some embodiments of the subject disclosure.

## DETAILED DESCRIPTION

The following disclosure provides many different embodiments, or examples, for implementing different features of the provided subject matter. Specific examples of components, values, operations, materials, arrangements, or the like, are described below to simplify the present disclosure. These are, of course, merely examples and are not intended to be limiting. Other components, values, operations, materials, arrangements, or the like, are contemplated. In addition, the present disclosure may repeat reference numerals and/or letters in the various examples. This repetition is for the purpose of simplicity and clarity and does not in itself dictate a relationship between the various embodiments and/or configurations discussed.

It will be apparent that systems and/or methods, described herein, may be implemented in different forms of hardware, software, or a combination of hardware and software. The actual specialized control hardware or software code used to implement these systems and/or methods should not limit their implementations. Thus, the operation and behavior of the systems and/or methods are described herein without reference to specific software code. It is understood that software and hardware may be designed to implement the systems and/or methods based on the description herein.

Even though particular combinations of features are recited in the claims and/or disclosed in the specification, the particular combinations are not intended to limit the disclosure of implementations. In fact, many of these features may be combined in ways not specifically recited in the claims and/or disclosed in the specification. Even if a dependent claim directly depends on only one claim, the present disclosure may indicate that the dependent claim is dependent on other claims in the claim set.

No element, act, or instruction used herein should be construed as critical or essential unless explicitly described as such. Also, as used herein, the articles "a" and "an" (in other words, nouns not mentioned in the plural) are intended to include one or more items, and may be used interchangeably with "one or more." Also, as used herein, the terms "has," "have," "having," "include," "including," or the like are intended to be open-ended terms. Further, the phrase "based on" is intended to mean "based, at least in part, on" unless explicitly stated otherwise. Furthermore, expressions such as "at least one of [A] and [B]," "[A] and/or [B]," or "at least one of [A] or [B]" are to be understood as including only A, only B, or both A and B.

In the present disclosure, specific tasks may be performed using AI/ML (Artificial Intelligence/Machine Learning) models. An AI/ML model is a model generated using one or more AI technologies, one or more ML algorithm or both, and generates output data based on input data. This output data is used to perform tasks. Tasks performed using AI/ML models include those generally referred to as intellectual tasks, such as classification, prediction, natural language processing, etc.

Although AI and ML are explained separately, ML is a technology included in AI. In ML, instead of being explicitly programmed for a specific task, systems can improve their performance over time by identifying patterns and making inferences from training data. Typically, the generation of ML models includes data collection, model training, and model inference. Data collection involves gathering and preprocessing data to be used for training and inference. Model training involves developing and validating models using the collected data. Model inference involves applying the trained models to new data to generate new output data and perform tasks.

Machine learning includes various types of learning methods such as supervised learning, unsupervised learning, reinforcement learning, semi-supervised learning, selfsupervised learning, transductive learning, transfer learning, meta learning, and the like. These types of learning methods can be appropriately selected according to the embodiments. Unless otherwise specified, the application of types not mentioned in this description is not precluded. Additionally, the structure of ML models may vary depending on the embodiments and learning methods, and is not limited to the methods disclosed. Furthermore, ML includes deep learning, which uses models that include neural networks. Deep learning models may include, for example, deep neural networks (DNNs), convolutional neural networks (CNNs), etc.

It should be noted that the AI/ML models presented hereinafter are examples and are not limited to the illustrated AI/ML models. They can be modified or altered by using different AI or ML algorithms. The configuration of the neural network is not limited to the configuration disclosed in the present disclosure and can be modified.

It is computationally prohibitive to scale $L$ to a very large number. For example, 1 GB of email contains hundreds of millions of tokens, far exceeding any commercial API's limit (usually 32k to 100k). Transformers do not learn during inference. If we want to adjust its behavior, we need to carry a prompt shorter than $L$ for every conversation turn. Error rate grows with complexity. Prompt engineering and RAG becomes increasingly error-prone as the task complexity increases.

A language model according to at least some embodiments of the subject disclosure utilizes a recurrent memory state including encoded states from previous input from which to base the output. In at least some embodiments, the recurrent memory state is a fixed memory size.

In at least some embodiments, language models generating output based on a recurrent memory state representing previous input requires less memory than language models generating output based on transformer architecture that directly considers previous input within a context window.

In at least some embodiments, the hyperspace of token embeddings is partitioned into *M* fixed topics. In at least some embodiments, each topic centroid $W_\alpha^m$ serves as an anchor for its partition, with $h_t^m$ representing the memory vector for the *m*-th topic. In at least some embodiments, each memory vector uses hardware storage of the size of the memory vector.

In at least some embodiments, given an input embedding $x_t$, a topic affinity $\alpha_t$ is calculated across all topic centroids. In at least some embodiments, a final output embedding $y_t$ is formed as a weighted average of the memory vectors, using $\alpha_t$ as the weights.

$$\alpha_t = \text{softmax}(W_\alpha^1 \cdot x_t, W_\alpha^2 \cdot x_t, \dots W_\alpha^M \cdot x_t) \in \mathbb{R}^m \qquad \text{EQ. 1}$$

$$y_t = \sum_{m=1}^{M} \alpha_t^m \cdot h_t^m \qquad \text{EQ. 2}$$

where $\mathbb{R}^m$ represents a feature space of *m* dimensions.

In at least some embodiments, the memory update is also gated by the topic affinities. In at least some embodiments, only memory vectors corresponding to topics closely aligned with the input receive significant updates, while other topic-specific memories remain unaffected:

$$h_t^m = h_{t-1}^m + \alpha_t^m \cdot \eta \cdot \tau \left( x_t \cdot \left(1 - \mathcal{P}(x_t \mid h_{t-1}^m)\right) - \sum_{n \in N^-} n \cdot \mathcal{P}(n \mid h_{t-1}^m) \right) \qquad \text{EQ. 3}$$

where $\eta$ is the learning rate and $\tau$ is a scaling temperature parameter.

In at least some embodiments, the negative term in the original memory update rule can be simplified by leveraging the assumption that, in a well-trained embedding space, token embeddings are evenly distributed across their topic partitions. In at least some embodiments, input embeddings are RMS or layer-normalized for each transformer.

In at least some embodiments, a scaling factor for the update is defined as:

$$S(h_t, x_t) = \eta \cdot \tau \cdot \left(1 - \mathcal{P}(x_t \mid h_t)\right) \qquad \text{EQ. 4}$$

In at least some embodiments, associative parallel scan computation is enabled by simplifying the $\mathcal{P}(x_t|h_t)$ to not depend on $h_t$, leading to:

$$S(h_t, x_t) \approx \sigma(W_r \cdot x_t) \cdot (1 - \alpha_t^m) \qquad \text{EQ. 5}$$

or

$$S(h_t, x_t) \approx \eta(\tau \cdot r) = \sigma(W_{hr} \cdot x_t) \qquad \text{EQ. 6}$$

and the model becomes:

$$h_t^m = \left(1 - \alpha_t^m \sigma(W_r x_t)\right) \cdot h_{t-1}^m + \alpha_t^m \sigma(W_r x_t) \cdot x_t \qquad \text{EQ. 7}$$

With the foregoing memory update equation, it can take multiple steps for $h_t^m$, which can be initialized as a zero tensor at the beginning of the sequence, to accumulate a stable norm. This gradual norm buildup can delay convergence. In at least some embodiments, a normalization layer, specifically RMS normalization, is incorporated prior to the memory layer's output. In at least some embodiments, RMS normalization aids in stabilizing the output scale across updates. In at least some embodiments, the layer's expressiveness is extended by incorporating input and output projections, which allow dynamic control over memory dimensions and multi-head numbers. In at least some embodiments, an output gating mechanism is also introduced, which empirically enhances model performance with a minimal computational footprint. In at least some embodiments, the architecture here does not require Convolutional 1-Dimensional (Conv1D) processing to maintain robust sequential reasoning, potentially due to its inherent structure and topic-adaptive memory design.

In at least some embodiments, the foregoing is put altogether as a set of equations described hereinafter for utilizing a recurrent memory state. In at least some embodiments, this set of equations for utilizing a recurrent memory state enables scaling to a large number of topic partitions $m$. In at least some embodiments, $\alpha_t$ functions as a routing probability, skewing updates towards the most relevant partitions.

In at least some embodiments, the update router weight, such as $\theta_t$ as described hereinafter, can be viewed as the centroid of memory $h^m$'s designated space. In at least some embodiments, this unblocks parallel training optimizations.

In at least some embodiments, the gating network will also skew $(W_i \cdot x_t)$ away from memory block $h^m$ where $h^m$ is far from $(W_i \cdot x_t)$ and has a small topic affinity score, thus blocking overriding memories that are storing a different topic, similar to a context switch. In at least some embodiments, topic affinity $\alpha_t$ is a probability distribution summing up to 1.0, and therefore update weight $\theta_t(W_i \cdot x_t)$ sums to the learning rate $\eta$.

In at least some embodiments, the network is "sparsely activated" so that the computation where $\theta_t(W_i \cdot x_t)$ is close to 0 can be dropped without significantly affecting the result. In at least some embodiments, this property enables the memory to scale to billions of topics $m$. In at least some embodiments, by making a straightforward adaptation, the following set of equations for utilizing a recurrent memory state, which are dense, can be transformed into a sparse variant, significantly enhancing computational efficiency without significantly sacrificing model expressiveness, as will be described hereinafter.

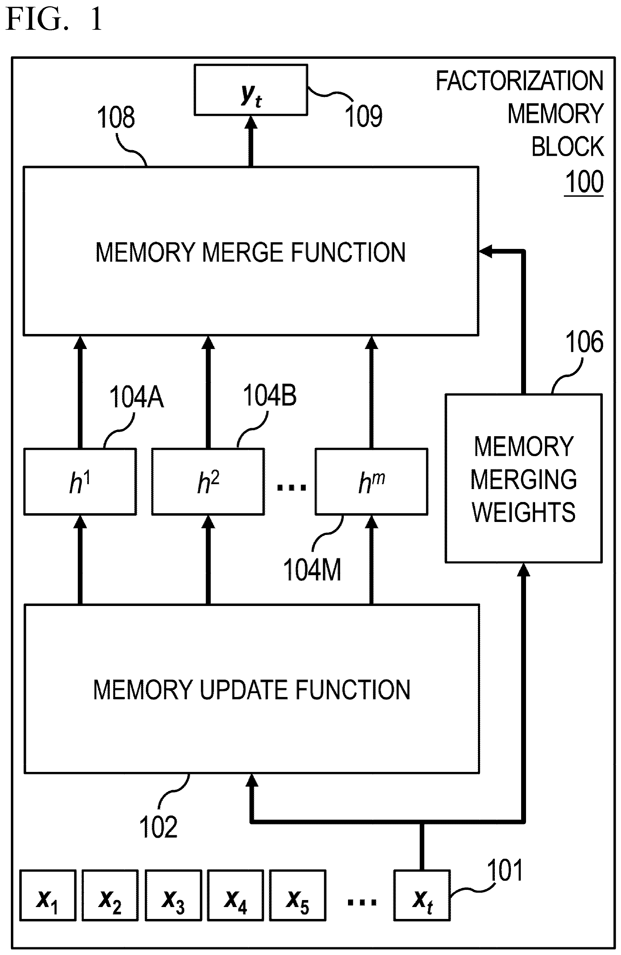

FIG. 1 is a schematic diagram of a factorization memory block 100 of a language model, according to at least some embodiments of the subject disclosure. Factorization memory block 100 includes an input token embedding 101, a memory update function 102, topic vectors 104A, 104B, and 104M, memory merging weights 106, a memory merge function 108, and an output token embedding 109. In at least some embodiments, factorization memory block 100 is configured to selectively update parts of a recurrent memory state on which output is based.

Input token embedding 101 is an instance of input into factorization memory block 100. In at least some embodiments, input token embedding 101 is configured to represent a token of a natural language prompt as a vector in feature space.

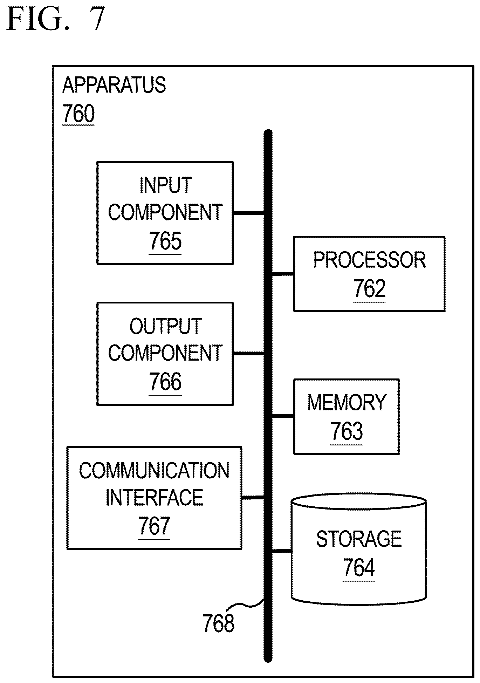

Memory update function 102 is an element of factorization memory block 100. In at least some embodiments, memory update function 102 is configured to update topic vectors, such as topic vectors 104A, 104B, and 104M, based on topic update weight values. In at least some embodiments, memory update function 102 is further configured to store updated topic vectors in a physical memory, such as memory 763 of FIG. 7, described hereinafter.

Topic vectors, such as topic vectors 104A, 104B, and 104M, are elements of factorization memory block 100. In at least some embodiments, topic vectors form a recurrent memory state. In at least some embodiments, each of topic vectors 104A, 104B, and 104M are updated by memory update function 102 based on topic update weight values. In at least some embodiments, only some topic vectors are updated in response to each input token embedding. In at least some embodiments, topic vectors are merged by memory merge function 108 to produce output token embedding 109.

Memory merging weights 106 are elements of factorization memory block 100. In at least some embodiments, memory merging weights 106 are configured to control merging of topic vectors, such as topic vectors 104A, 104B, and 104M, based on affinity of the input token embedding for each topic. In at least some embodiments, memory merging weights 106 are configured to skew the impact on the output token embedding 109 toward topics for which the token embedding has a higher affinity. In at least some embodiments, memory merging weights 106 are computed using topic merge rates and topic affinity scores.

Memory merge function 108 is an element of factorization memory block 100. In at least some embodiments, memory merge function 108 is configured to merge updated topic vectors, such as topic vectors 104A, 104B, and 104M, to produce output token embedding 109. In at least some embodiments, memory merge function 108 is configured to compute an output projection of merged topic vectors. In at least some embodiments, memory merge function 108 is further configured to read updated topic vectors from a physical memory, such as memory 763 of FIG. 7, described hereinafter.

Output token embedding 109 is an instance of output from factorization memory block 100. In at least some embodiments, output token embedding 109 is produced by merging updated topic vectors, such as topic vectors 104A, 104B, and 104M, using memory merge function 108. In at least some embodiments, output token embedding 109 is an output projection of merged topic vectors.

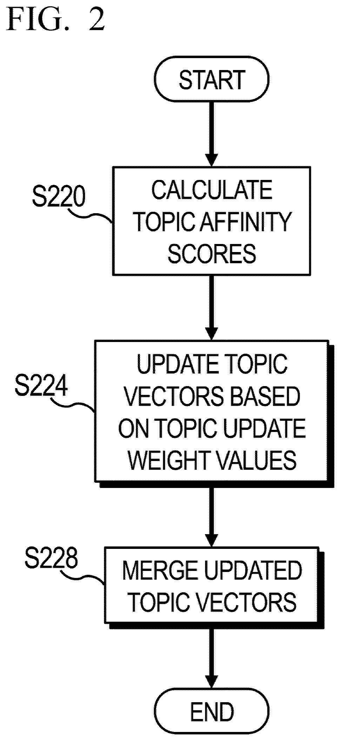

FIG. 2 is an operational flow for utilizing a recurrent memory state, according to at least some embodiments of the subject disclosure. In at least some embodiments, the operational flow provides a method of utilizing a recurrent memory state. In at least some embodiments, the method is performed by a processor of an apparatus, such as processor 762 of apparatus 760 of FIG. 7, described hereinafter.

At S220, the processor calculates topic affinity scores. In at least some embodiments, the processor receives an input token embedding. In at least some embodiments, the processor normalizes the input token embedding before calculating the topic affinity scores. In at least some embodiments, the normalizing is Root-Mean-Square (RMS) normalization. In at least some embodiments, the processor applies a Softmax to calculate the topic affinity scores. In at least some embodiments, the processor calculates topic affinity scores $\alpha_t$ according to the following equation:

$$\alpha_t = \text{softmax}(W_\alpha x_t) \in \mathbb{R}^m \qquad \text{EQ. 1}$$

where $W_\alpha$ represents the topic affinity weight matrix, $x_t$ represents the input token embedding at time step $t$, $m$ represents the quantity of topics, and $\mathbb{R}^m$ represents a feature space of m dimensions. In at least some embodiments, the topic affinity scores total 1. In at least some embodiments, the processor retrieves the topic affinity weight matrix from among trained parameter values of the language model. In at least some embodiments, the processor calculates topic affinity scores $\alpha_t$ according to the following equation:

$$\alpha_t = \text{softmax}(W_\alpha x_t / \tau) \in \mathbb{R}^m \qquad \text{EQ. 2}$$

where $\tau$ represents a topic affinity temperature value. In at least some embodiments, the processor retrieves the topic affinity temperature value from among configurable parameters or hyper-parameters. In at least some embodiments, the processor calculates topic affinity scores based on the input token embedding, the topic affinity weight matrix, and the topic affinity temperature value. In at least some embodiments, the processor calculates a topic affinity score for each topic vector among a plurality of topic vectors based on an input token embedding and the topic affinity weight matrix.

In at least some embodiments, the processor performs a sparse update. In at least some embodiments, the processor calculates topic affinity scores such that only topics having the highest affinity scores are updated. In at least some embodiments, after $\alpha_t$ is calculated according to EQ. 1 or EQ. 2, the processor selects the top-$k$ relevant memory states according to the following equation:

$$\gamma_t = \mathcal{T}(\alpha_t, k), k \ll m \qquad \text{EQ. 3}$$

where $\mathcal{T}(\cdot)$ represents a top-$k$ function, and $k$ represents the quantity of topics to be updated. In at least some embodiments, as a result of applying EQ. 3, only the highest $k$ affinity scores are preserved, and the others are set to a value of zero. In at least some embodiments, the processor then re-normalizes the affinity scores according to the following equation:

$$\bar{\alpha}_t = \frac{\gamma_t \odot \alpha_t}{\gamma_t \alpha_t} \qquad \text{EQ. 4}$$

where $\bar{\alpha}_t$ represents sparse update affinity scores. In at least some embodiments, the processor proceeds to the topic vector update at S224 and updated topic vector merge at S228 utilizing $\bar{\alpha}_t$ instead of $\alpha_t$ to perform a sparse update and merge.

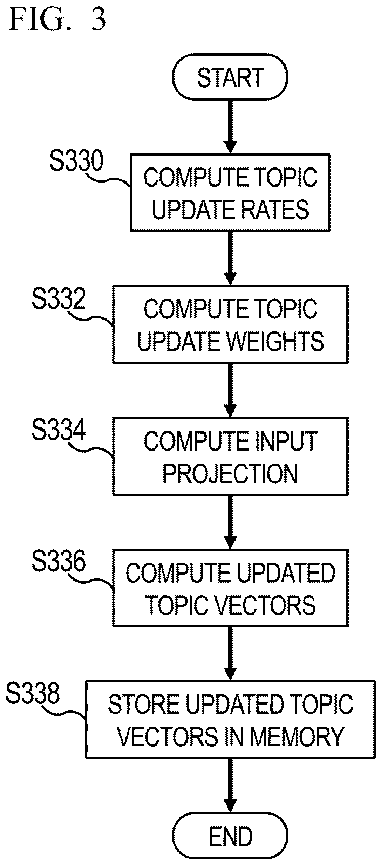

At S224, the processor updates topic vectors based on topic update weight values. In at least some embodiments, the processor computes updated topic vectors based on the input token embedding, the topic update weights, and preceding topic vectors. In at least some embodiments, the processor computes updated topic vectors only or some topics. In at least some embodiments, the processor updates each topic vector among the at least some of the plurality of topic vectors of which the corresponding topic affinity weight value is among a predetermined quantity of greatest topic affinity weight values. In at least some embodiments, the processor computes updated topic vectors according to topic affinity scores $\bar{\alpha}_t$ instead of $\alpha_t$ to perform a sparse update. In at least some embodiments, the processor updates each topic vector among the at least some of the plurality of topic vectors of which the corresponding topic affinity weight value is greater than a threshold affinity weight value. In at least some embodiments, the processor retrieves preceding topic vectors from a physical memory, such as memory 763 of FIG. 7, described hereinafter. In at least some embodiments, the processor stores the updated topic vectors in the physical memory. In at least some embodiments, the processor updates each topic vector among at least some of the plurality of topic vectors based on a corresponding topic affinity weight value. In at least some embodiments, the processor performs the operational flow of FIG. 3, described hereinafter.

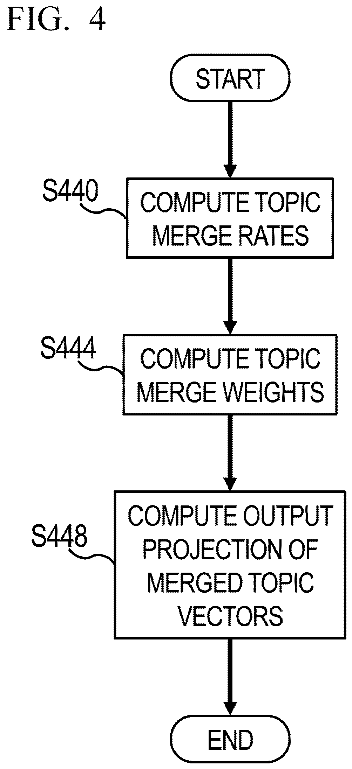

At S228, the processor merges updated topic vectors. In at least some embodiments, the processor computes an output projection of merged topic vectors based on topic merge weights, the updated topic vectors, and output projection weight values. In at least some embodiments, the processor retrieves the updated topic vectors from the physical memory. In at least some embodiments, the processor merges the updated plurality of topic vectors to produce an output token embedding. In at least some embodiments, the processor merges each topic vector among the at least some of the plurality of topic vectors of which the corresponding topic affinity weight value is among a predetermined quantity of greatest topic affinity weight values. In at least some embodiments, the processor merges updated topic vectors according to topic affinity scores $\overline{\alpha}_t$ instead of $\alpha_t$ to perform a sparse merge. In at least some embodiments, the processor performs the operational flow of FIG. 4, described hereinafter.

FIG. 3 is an operational flow for updating topic vectors, according to at least some embodiments of the subject disclosure. In at least some embodiments, the operational flow provides a method of updating topic vectors. In at least some embodiments, the method is performed by a processor of an apparatus, such as processor 762 of apparatus 760 of FIG. 7, described hereinafter.

At S330, the processor computes topic update rates. In at least some embodiments, the processor computes topic update rates using topic update rate weight values and an input token embedding. In at least some embodiments, the processor computes topic update rates $\eta_t$ according to the following equation:

$$\eta_t = \sigma\left(w_\eta^T x_t\right) \in (0,1) \qquad \text{EQ. 5}$$

where $w_\eta$ represents topic update rate weight values, and $\sigma(\cdot)$ represents sigmoid activation. In at least some embodiments, the processor retrieves the topic update rate weight values from among trained parameter values of the language model. In at least some embodiments, the processor uses the topic update rate weight values and the input token embedding as inputs to determine the topic update rates.

At S332, the processor computes topic update weights. In at least some embodiments, the processor computes topic update weights using the topic update rates and the topic affinity scores. In at least some embodiments, the processor computes topic update weights $\theta_t$ according to the following equation:

$$\theta_t = \eta_t \alpha_t \in \mathbb{R}^m \qquad \text{EQ. 6.}$$

In at least some embodiments, the processor uses the topic update rates and the topic affinity scores as inputs to determine the topic update weights.

At S334, the processor computes an input projection. In at least some embodiments, the processor computes the input projection using an input projection weight matrix and the input token embedding. In at least some embodiments, the processor computes an input projection $\overline{x}_t$ according to the following equation:

$$\overline{x}_t = W_i x_t \qquad \text{EQ. 7}$$

where $W_i$ represents the input projection weight matrix. In at least some embodiments, the processor retrieves the input projection weight matrix from among trained parameter values of the language model.

At S336, the processor computes updated topic vectors. In at least some embodiments, the processor computes the updated topic vectors using the input projection, the topic update weights, and the preceding topic vectors. In at least some embodiments, each topic vector among the plurality of topic vectors has a fixed length. In at least some embodiments, the processor computes the updated topic vectors $h_t$ according to the following equation:

$$h_t = \text{diag}(1 - \theta_t)h_{t-1} + \theta_t \otimes \overline{x}_t \qquad \text{EQ. 8}$$

where $h_{t-1}$ represents the preceding topic vectors. In at least some embodiments, the processor uses the input projection, the topic update weights, and the preceding topic vectors as inputs to determine the updated topic vectors.

At S338, the processor stores updated topic vectors in memory. In at least some embodiments, the processor stores each updated topic vector in one or more memory banks having a capacity equal to the updated topic vector. In at least some embodiments, the processor stores the updated topic vectors in memory by overwriting the preceding topic vectors. In at least some embodiments, the processor stores the updated topic vectors in memory by preserving the preceding topic vectors during training of the language model.

FIG. 4 is an operational flow for merging updated topic vectors, according to at least some embodiments of the subject disclosure. In at least some embodiments, the operational flow provides a method of merging updated topic vectors. In at least some embodiments, the method is performed by a processor of an apparatus, such as processor 762 of apparatus 760 of FIG. 7, described hereinafter.

At S440, the processor computes topic merge rates. In at least some embodiments, the processor computes topic merge rates using topic merge rate weight values and an input token embedding. In at least some embodiments, the processor computes topic merge rates $\mu_t$ according to the following equation:

$$\mu_t = \sigma\left(w_\mu^T x_t\right) \in (0,1) \qquad \text{EQ. 9}$$

where $w_\mu$ represents topic merge rate weight values. In at least some embodiments, the processor retrieves the topic merge rate weight values from among trained parameter values of the language model.

At S444, the processor computes topic merge weights. In at least some embodiments, the processor computes topic merge weights using the topic merge rates and topic affinity scores. In at least some embodiments, the processor computes topic merge weights $\phi_t$ according to the following equation:

$$\phi_t = \mu_t \alpha_t \in \mathbb{R}^m \qquad \text{EQ. 10.}$$

In at least some embodiments, the processor uses the topic merge weights to determine how much each topic vector should contribute to the merged representation.

At S448, the processor computes an output projection of merged topic vectors. In at least some embodiments, the processor computes the output projection using the topic merge weights, the updated topic vectors, and output projection weight values. In at least some embodiments, the processor computes output projection $y_t$ according to the following equation:

$$y_t = W_o \text{norm}(h_t)^T \phi_t \qquad \text{EQ. 11.}$$

where $W_o$ represents the output projection weight matrix. In at least some embodiments, the processor retrieves the output projection weight values from among trained parameter values of the language model. In at least some embodiments, the processor utilizes the output projection as an output token embedding.

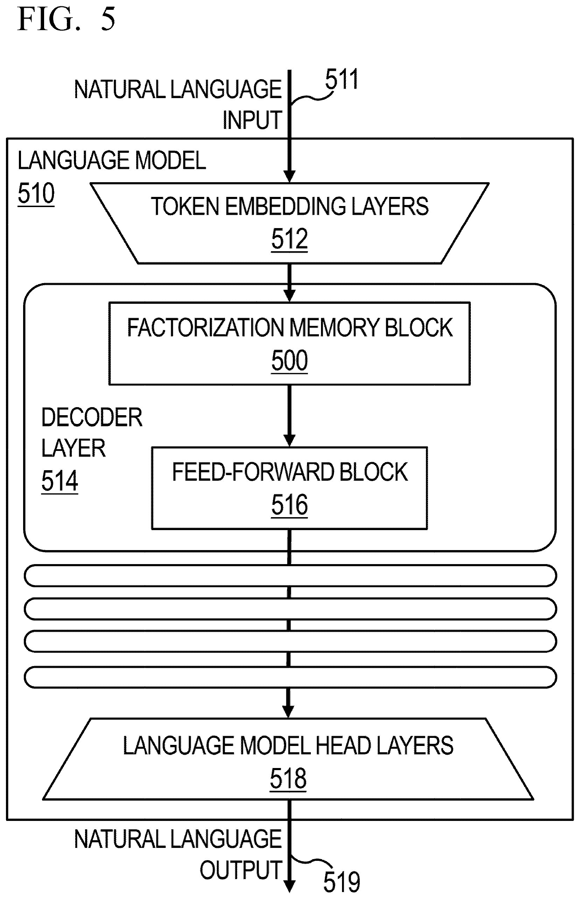

FIG. 5 is a schematic diagram of a language model with factorization memory, according to at least some embodiments of the subject disclosure. Language model 510 includes token embedding layers 512, one or more decoding layers, such as decoder layer 514, and language model head layers 518. In at least some embodiments, language model 510 is configured to receive a natural language prompt 511 as input. In at least some embodiments, language model 510 is configured to produce a natural language response 519 as output. Although language model 510 is primarily designed for natural language, natural language prompt 511 and natural language response 519 are not strictly limited to natural language. Natural language prompt 511 and natural language response 519 may include non-linguistic text such as code, mathematical algorithms, programming or markup language, or any other non-linguistic elements that commonly accompany natural language.

Token embedding layers 512 are a group of layers included in language model 510. In at least some embodiments, token embedding layers 512 are configured to parse natural language prompt 511 into tokens. In at least some embodiments, token embedding layers 512 are configured to embed the tokens into vectors in a feature space. In at least some embodiments, token embedding layers 512 are configured to encode natural language prompt 511 into an input token embedding, such as input token embedding 101 of FIG. 1. In at least some embodiments, token embedding layers 512 are compatible with language models in general. In at least some embodiments, token embedding layers 512 are trainable separately from language model 510. In at least some embodiments, token embedding layers 512 are trained with language model 510 as a whole.

Decoder layers, including decoding layer 514, are a group of layers included in language model 510. Decoder layer 514 comprises a factorization memory block 500 and a feed-forward block 516. In at least some embodiments, each decoder layer includes a factorization memory block. In at least some embodiments, each decoder layer includes only a factorization memory block. In at least some embodiments, some decoder layers optionally include a feed-forward block, a fully connected block, etc., or any combination thereof along with the factorization memory block. In at least some embodiments, some decoder layers include an attention block or a Multi-Layer Perceptron (MLP) block instead of a factorization memory block.

Factorization memory block 500 is a component of decoding layer 514. In at least some embodiments, factorization memory block 500 is configured to selectively update parts of a recurrent memory state on which output is based. In at least some embodiments, factorization memory block 500 comprises a memory update function and a memory merge function. In at least some embodiments, factorization memory block 500 is configured to calculate topic affinity scores, update topic vectors based on topic update weight values, and merge updated topic vectors to produce an output token embedding. In at least some embodiments, factorization memory block 500 is configured as described in FIG. 1.

Feed-forward block 516 is a component of decoding layer 514. In at least some embodiments, feed-forward block 516 is an optional block within decoder layer 514. In at least some embodiments, feed-forward block 516 is configured to perform additional processing on an output token embedding. In at least some embodiments, feed-forward block 516 is configured to refine an output projection into an output token embedding.

Language model head layers 518 are a group of layers included in language model 510. In at least some embodiments, language model head layers 518 are configured to decode embedded token vectors into tokens. In at least some embodiments, language model head layers 518 are configured to assemble the tokens into natural language response 519. In at least some embodiments, language model head layers 518 are configured to decode an output token embedding into natural language response 519. In at least some embodiments, language model head layers 518 are compatible with language models in general. In at least some embodiments, language model head layers 518 are trained with language model 510 as a whole.

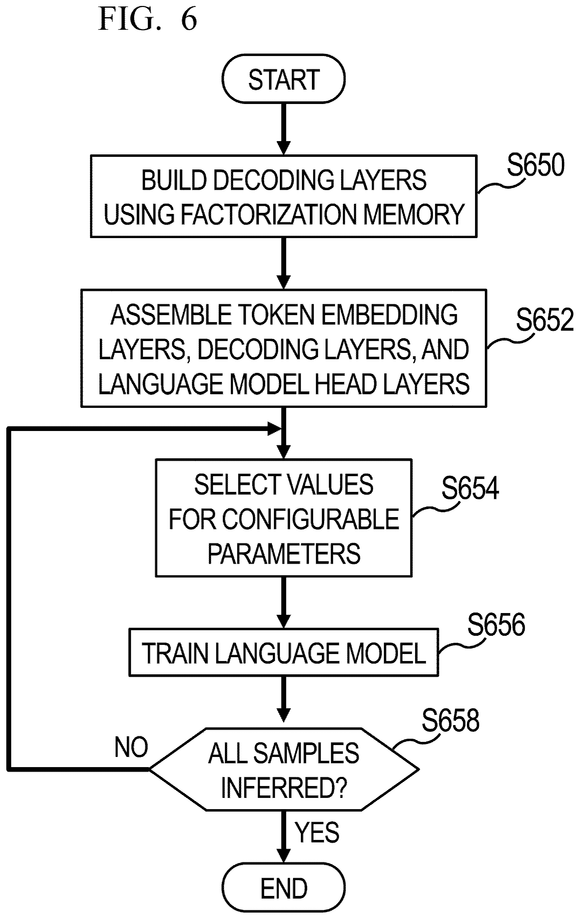

FIG. 6 is an operational flow for assembling and training a language model with factorization memory, according to at least some embodiments of the subject disclosure. In at least some embodiments, the operational flow provides a method of assembling and training a language model with factorization memory. In at least some embodiments, the method is performed by a processor of an apparatus, such as processor 762 of apparatus 760 of FIG. 7, described hereinafter.

At S650, the processor builds decoding layers using factorization memory. In at least some embodiments, the processor builds decoding layers in which at least some include a factorization memory block. In at least some embodiments, the processor builds decoding layers in a quantity, configuration, and pattern according to user input. In at least some embodiments, the processor includes one or more optional blocks in the decoding layers, such as a feed-forward block, a fully connected block, etc. In at least some embodiments, the processor builds decoding layers in which at least some include an attention block or an MLP instead of a factorization memory block.

At S652, the processor assembles token embedding layers, decoding layers, and language model head layers. In at least some embodiments, the processor assembles the language model by combining the decoding layers with token embedding layers on the input side and language model head layers on the output side. In at least some embodiments, the processor configures the output dimensionality of the token embedding layers to match the input dimensionality of the decoding layers. In at least some embodiments, the processor configures the input dimensionality of the language model head layers to match the output dimensionality of the decoding layers.

At S654, the processor selects values for configurable parameters. In at least some embodiments, the processor selects values for parameters including the total quantity of topic vectors, such as $m$ in EQ. 1, the topic affinity temperature, such as $\tau$ in EQ. 2, and quantity of updated topic vectors per input embedding, such as $k$ in EQ. 3. In at least some embodiments, the processor sets values for configurable parameters according to user input. In at least some embodiments, the processor selects values for configurable parameters according to training results.

At S656, the processor trains the language model. In at least some embodiments, the processor uses a training set of training samples, computes loss according to a loss function, and updates the trainable parameters of the language model according to the computed loss. In at least some embodiments, the processor trains parameters including topic affinity weight values, topic update rate weight values, topic merge rate weight values, input projection weight values, output projection weight values, token embedding layer parameters, language model head layer parameters, and any other trainable parameters in the language model. In at least some embodiments, as the language model is trained, the processor partitions a hyperspace of token embeddings into a plurality of topic partitions. In at least some embodiments, as the language model is trained, the processor encodes a centroid of each topic partition as a topic vector, upon which the topic affinity weight values are based.

At S658, the processor determines whether accuracy and computational efficiency are acceptable. In response to the processor determining that accuracy and computational efficiency are not acceptable, the operational flow returns to select different values for configurable parameters at S654. In response to the processor determining that accuracy and computational efficiency are acceptable, the operational flow ends.

FIG. 7 illustrates an embodiment of apparatus 760 for language modelling with factorization memory, according to at least some embodiments of the subject disclosure. As shown in FIG. 7, apparatus 760 includes processor 762, memory 763, storage 764, input component 765, output component 766, communication interface 767, and bus 768. processor 762, as used herein, means any type of computational circuit that may comprise hardware elements and software elements. processor 762 may be embodied as a multi-core processor, a single core processor, or a combination of one or more multi-core processors and/or one or more single core processors, a distributed processing system, or the like. processor 762 may be a Central Processing Unit (CPU), a graphics processing unit (GPU), an accelerated processing unit (APU), an application-specific integrated circuit (ASIC), or another type of processing component.

Memory 763 includes a non-transitory computer readable medium. memory 763 includes a random-access memory (RAM), a read only memory (ROM), and/or another type of dynamic or static storage device (e.g., a flash memory, a magnetic memory, and/or an optical memory) that stores information and/or instructions for use by processor 762. The memory 763 comprises machine-readable instructions which are executable by processor 762. These machine-readable instructions when executed by processor 762 cause processor 762 to perform one or more method steps of an embodiment described above.

Storage 764 stores information and/or software related to the operation and use of the apparatus 760. For example, storage 764 may include a hard disk (e.g., a magnetic disk, an optical disk, a magneto-optic disk, and/or a solid-state disk), a compact disc (CD), a digital versatile disc (DVD), a floppy disk, a cartridge, a magnetic tape, and/or another type of non-transitory computer-readable medium, along with a corresponding drive.

Input component 765 is configured to receive information, such as user input. For example, the input component 765 may include, but not be limited to, a touch screen display, a keyboard, a keypad, a mouse, a button, a switch, and/or a microphone. Additionally, or alternatively, the input component 765 may include a sensor for sensing information (e.g., a global positioning system (GPS), an accelerometer, a gyroscope, and/or an actuator).

Output component 766 is configured to provide output information from the apparatus 760. For example, the output component 766 may be, but not limited to, a display, a speaker, an instruction device to an external device, and/or one or more light-emitting diodes (LEDs).

Communication interface 767 is an interface that provides a communication connection to other devices, such as external devices and internal devices. The connection by the communication interface 767 can be a wired connection, a wireless connection, or a combination of wired and wireless connections, and can be a direct connection or an indirect connection via a communication network that exists between apparatus 760 and other devices. In other words, the standard of the communication interface 767 is not limited.

Bus 768 acts as an interconnect between processor 762, memory 763, storage 764, the input component 765, the output component 766, and the communication interface 767 of apparatus 760. The bus 768 may include a wired interconnection or a wireless interconnection.

The number and arrangement of components shown in FIG. 7 are provided as an example. In practice, apparatus 760 may include additional components, fewer components, different components, or differently arranged components than those shown in FIG. 7. Additionally, or alternatively, a set of components (e.g., one or more components) of apparatus 760 may perform one or more functions described as being performed by another set of components of apparatus 760. Further, one or more method steps described in any of the embodiments may be performed utilizing a plurality of apparatus 760 in communication with one another.

In at least some embodiments, language modelling with factorization memory is performed by a method of operations comprising calculating a topic affinity score for each topic vector among a plurality of topic vectors based on an input token embedding and a topic affinity weight matrix, updating each topic vector among at least some of the plurality of topic vectors based on a corresponding topic affinity score, and merging the updated at least some of the plurality of topic vectors to produce an output token embedding.

In at least some embodiments, the updating operation of the method includes computing a topic update rate value for each topic vector among the at least some of the plurality of topic vectors based on a topic update rate weight and the input token embedding. In at least some embodiments, the updating further includes computing a topic update weight value for each topic among the at least some of the plurality of topic vectors based on the topic update rate value and the topic affinity score. In at least some embodiments, the updating further includes computing an input projection based on an input projection weight matrix and the input token embedding. In at least some embodiments, the updating further includes computing an updated topic vector for each topic vector among the at least some of the plurality of topic vectors based on the topic update weight value, the input projection, and a preceding topic vector. In at least some embodiments, the updating further includes storing each updated topic vector in a physical memory. In at least some embodiments, the updating further includes retrieving the preceding topic vector corresponding to each topic vector among the at least some of the plurality of topic vectors from the physical memory. In at least some embodiments, the merging includes computing a topic merge rate value for each topic vector among the at least some of the plurality of topic vectors based on a topic merge rate weight and the input token embedding. In at least some embodiments, the merging further includes computing a topic merge weight value for each topic among the at least some of the plurality of topic vectors based on the topic merge rate value and the topic affinity score. In at least some embodiments, the merging further includes computing an output projection based on an output projection weight matrix, the updated topic vectors, and the topic merge weight values for each topic among the at least some of the plurality of topic vectors. In at least some embodiments, the method further comprises encoding a natural language input into the input token embedding and decoding the output token embedding into a natural language output. In at least some embodiments, the calculating of each topic affinity score is further based on a topic affinity temperature value. In at least some embodiments, the calculating includes selecting a predetermined quantity of topic vectors among the plurality of topic vectors having the highest topic affinity scores, the predetermined quantity of topic vectors being the at least some of the plurality of topic vectors.

In at least some embodiments, language modelling with factorization memory is performed by an apparatus configured to perform operations comprising calculating a topic affinity score for each topic vector among a plurality of topic vectors based on an input token embedding and a topic affinity weight matrix, updating each topic vector among at least some of the plurality of topic vectors based on a corresponding topic affinity score, and merging the updated at least some of the plurality of topic vectors to produce an output token embedding.

In at least some embodiments, the updating operation performed by the apparatus includes computing a topic update rate value for each topic vector among the at least some of the plurality of topic vectors based on a topic update rate weight and the input token embedding. In at least some embodiments, the updating further includes computing a topic update weight value for each topic among the at least some of the plurality of topic vectors based on the topic update rate value and the topic affinity score. In at least some embodiments, the updating further includes computing an input projection based on an input projection weight matrix and the input token embedding. In at least some embodiments, the updating further includes computing an updated topic vector for each topic vector among the at least some of the plurality of topic vectors based on the topic update weight value, the input projection, and a preceding topic vector. In at least some embodiments, the updating further includes storing each updated topic vector in a physical memory. In at least some embodiments, the updating further includes retrieving the preceding topic vector corresponding to each topic vector among the at least some of the plurality of topic vectors from the physical memory. In at least some embodiments, the merging includes computing a topic merge rate value for each topic vector among the at least some of the plurality of topic vectors based on a topic merge rate weight and the input token embedding. In at least some embodiments, the merging further includes computing a topic merge weight value for each topic among the at least some of the plurality of topic vectors based on the topic merge rate value and the topic affinity score. In at least some embodiments, the merging further includes computing an output projection based on an output projection weight matrix, the updated topic vectors, and the topic merge weight values for each topic among the at least some of the plurality of topic vectors. In at least some embodiments, the operations performed by the apparatus further comprise encoding a natural language input into the input token embedding and decoding the output token embedding into a natural language output. In at least some embodiments, the calculating of each topic affinity score is further based on a topic affinity temperature value. In at least some embodiments, the calculating includes selecting a predetermined quantity of topic vectors among the plurality of topic vectors having the highest topic affinity scores, the predetermined quantity of topic vectors being the at least some of the plurality of topic vectors.

In at least some embodiments, language modelling with factorization memory is performed by a non-transitory computer-readable medium including instructions that, in response to execution by one or more processors, causes performance of operations comprising calculating a topic affinity score for each topic vector among a plurality of topic vectors based on an input token embedding and a topic affinity weight matrix, updating each topic vector among at least some of the plurality of topic vectors based on a corresponding topic affinity score, and merging the updated at least some of the plurality of topic vectors to produce an output token embedding.

In at least some embodiments, the updating operation includes computing a topic update rate value for each topic vector among the at least some of the plurality of topic vectors based on a topic update rate weight and the input token embedding. In at least some embodiments, the updating further includes computing a topic update weight value for each topic among the at least some of the plurality of topic vectors based on the topic update rate value and the topic affinity score. In at least some embodiments, the updating further includes computing an input projection based on an input projection weight matrix and the input token embedding. In at least some embodiments, the updating further includes computing an updated topic vector for each topic vector among the at least some of the plurality of topic vectors based on the topic update weight value, the input projection, and a preceding topic vector. In at least some embodiments, the updating further includes storing each updated topic vector in a physical memory. In at least some embodiments, the updating further includes retrieving the preceding topic vector corresponding to each topic vector among the at least some of the plurality of topic vectors from the physical memory. In at least some embodiments, the merging includes computing a topic merge rate value for each topic vector among the at least some of the plurality of topic vectors based on a topic merge rate weight and the input token embedding. In at least some embodiments, the merging further includes computing a topic merge weight value for each topic among the at least some of the plurality of topic vectors based on the topic merge rate value and the topic affinity score. In at least some embodiments, the merging further includes computing an output projection based on an output projection weight matrix, the updated topic vectors, and the topic merge weight values for each topic among the at least some of the plurality of topic vectors. In at least some embodiments, the operations further comprise encoding a natural language input into the input token embedding and decoding the output token embedding into a natural language output. In at least some embodiments, the calculating of each topic affinity score is further based on a topic affinity temperature value. In at least some embodiments, the calculating includes selecting a predetermined quantity of topic vectors among the plurality of topic vectors having the highest topic affinity scores, the predetermined quantity of topic vectors being the at least some of the plurality of topic vectors. In at least some embodiments, the operations further comprise training a language model, the language model including a plurality of token embedding layers, at least one decoder layer including a factorization memory block, and a plurality of language model head layers, the factorization memory block comprising trainable parameters including the topic affinity weight matrix, the topic update rates, the topic merge rates, the input projection weight matrix, and the output projection weight matrix. In at least some embodiments, the operations further comprise selecting a value for each configurable parameter among at least some configurable parameters including a total quantity of topic vectors, a quantity of updated topic vectors per input embedding, and a topic affinity temperature.

**Claims**

1. A method comprising:

   calculating a topic affinity score for each topic vector among a plurality of topic vectors based on an input token embedding and a topic affinity weight matrix;
   updating each topic vector among at least some of the plurality of topic vectors based on a corresponding topic affinity score; and
   merging the updated at least some of the plurality of topic vectors to produce an output token embedding.

2. The method of claim 1, wherein
   the updating includes computing a topic update rate value for each topic vector among the at least some of the plurality of topic vectors based on a topic update rate weight and the input token embedding.

3. The method of claim 2, wherein
   the updating further includes computing a topic update weight value for each topic among the at least some of the plurality of topic vectors based on the topic update rate value and the topic affinity score.

4. The method of claim 3, wherein
   the updating further includes computing an input projection based on an input projection weight matrix and the input token embedding.

5. The method of claim 4, wherein
   the updating further includes computing an updated topic vector for each topic vector among the at least some of the plurality of topic vectors based on the topic update weight value, the input projection, and a preceding topic vector.

6. The method of claim 5, wherein
   the updating further includes storing each updated topic vector in a physical memory.

7. The method of claim 6, wherein
   the merging includes computing a topic merge rate value for each topic vector among the at least some of the plurality of topic vectors based on a topic merge rate weight and the input token embedding.

8. The method of claim 7, wherein
   the merging further includes computing a topic merge weight value for each topic among the at least some of the plurality of topic vectors based on the topic merge rate value and the topic affinity score.

9. The method of claim 8, wherein
   the merging further includes computing an output projection based on an output projection weight matrix, the updated topic vectors, and the topic merge weight values for each topic among the at least some of the plurality of topic vectors.

10. The method of claim 9, wherein
    training a language model, the language model including a plurality of token embedding layers, at least one decoder layer including a factorization memory block, and a plurality of language model head layers, the factorization memory block comprising trainable parameters including the topic affinity weight matrix, the topic update rates, the topic merge rates, the input projection weight matrix, and the output projection weight matrix.

11. The method of claim 10, wherein
    selecting a value for each configurable parameter among at least some configurable parameters including a total quantity of topic vectors, a quantity of updated topic vectors per input embedding, and a topic affinity temperature.

12. The method of claim 5, wherein

the updating further includes retrieving the preceding topic vector corresponding to each topic vector among the at least some of the plurality of topic vectors from the physical memory.

13. The method of claim 1, further comprising
encoding a natural language input into the input token embedding.

14. The method of claim 13, further comprising
decoding the output token embedding into a natural language output.

15. The method of claim 1, wherein
the calculating of each topic affinity score is further based on a topic affinity temperature value.

16. The method of claim 1, wherein
the calculating includes selecting a predetermined quantity of topic vectors among the plurality of topic vectors having the highest topic affinity scores, the predetermined quantity of topic vectors being the at least some of the plurality of topic vectors.

17. An apparatus configured to perform operations comprising:

calculating a topic affinity score for each topic vector among a plurality of topic vectors based on an input token embedding and a topic affinity weight matrix;
updating each topic vector among at least some of the plurality of topic vectors based on a corresponding topic affinity score; and
merging the updated at least some of the plurality of topic vectors to produce an output token embedding.

18. The apparatus of claim 17, wherein
the updating includes computing a topic update rate value for each topic vector among the at least some of the plurality of topic vectors based on a topic update rate weight and the input token embedding.

19. A non-transitory computer-readable medium including instructions that, in response to execution by one or more processors, causes performance of operations comprising:

calculating a topic affinity score for each topic vector among a plurality of topic vectors based on an input token embedding and a topic affinity weight matrix;
updating each topic vector among at least some of the plurality of topic vectors based on a corresponding topic affinity score; and
merging the updated at least some of the plurality of topic vectors to produce an output token embedding.

20. The computer-readable medium of claim 19, wherein
the updating includes computing a topic update rate value for each topic vector among the at least some of the plurality of topic vectors based on a topic update rate weight and the input token embedding.

## FIG. 1

FACTORIZATION MEMORY BLOCK 100

$y_t$ — 109

108

MEMORY MERGE FUNCTION

104A — $h^1$
104B — $h^2$
...
104M — $h^m$

106 — MEMORY MERGING WEIGHTS

MEMORY UPDATE FUNCTION

102

$x_1$ $x_2$ $x_3$ $x_4$ $x_5$ ... $x_t$ — 101

FIG. 2

```
              ┌─────────┐
              │  START  │
              └────┬────┘
                   │
                   ▼
         ┌──────────────────┐
         │    CALCULATE     │
   S220  │  TOPIC AFFINITY  │
         │     SCORES       │
         └────────┬─────────┘
                  │
                  ▼
         ┌──────────────────┐
         │   UPDATE TOPIC   │
   S224  │  VECTORS BASED   │
         │ ON TOPIC UPDATE  │
         │  WEIGHT VALUES   │
         └────────┬─────────┘
                  │
                  ▼
         ┌──────────────────┐
   S228  │  MERGE UPDATED   │
         │  TOPIC VECTORS   │
         └────────┬─────────┘
                  │
                  ▼
              ┌─────────┐
              │   END   │
              └─────────┘
```

# FIG. 3

```
        ┌─────────┐
        │  START  │
        └─────────┘
             │
             ▼
S330  ┌──────────────────┐
      │  COMPUTE TOPIC   │
      │  UPDATE RATES    │
      └──────────────────┘
             │
             ▼
S332  ┌──────────────────┐
      │  COMPUTE TOPIC   │
      │  UPDATE WEIGHTS  │
      └──────────────────┘
             │
             ▼
S334  ┌──────────────────┐
      │  COMPUTE INPUT   │
      │   PROJECTION     │
      └──────────────────┘
             │
             ▼
S336  ┌──────────────────┐
      │ COMPUTE UPDATED  │
      │  TOPIC VECTORS   │
      └──────────────────┘
             │
             ▼
S338  ┌──────────────────────┐
      │ STORE UPDATED TOPIC  │
      │ VECTORS IN MEMORY    │
      └──────────────────────┘
             │
             ▼
        ┌─────────┐
        │   END   │
        └─────────┘
```

FIG. 4

START

S440 COMPUTE TOPIC MERGE RATES

S444 COMPUTE TOPIC MERGE WEIGHTS

S448 COMPUTE OUTPUT PROJECTION OF MERGED TOPIC VECTORS

END

# FIG. 5

NATURAL LANGUAGE INPUT $\quad$ 511

**LANGUAGE MODEL**
**510**

TOKEN EMBEDDING LAYERS
512

DECODER
LAYER
514

FACTORIZATION MEMORY BLOCK
500

FEED-FORWARD BLOCK
516

LANGUAGE MODEL HEAD LAYERS
518

NATURAL LANGUAGE OUTPUT $\quad$ 519

## FIG. 6

START

BUILD DECODING LAYERS
USING FACTORIZATION MEMORY — S650

ASSEMBLE TOKEN EMBEDDING
LAYERS, DECODING LAYERS, AND
LANGUAGE MODEL HEAD LAYERS — S652

SELECT VALUES
FOR CONFIGURABLE
PARAMETERS — S654

TRAIN LANGUAGE MODEL — S656

S658
NO — ALL SAMPLES INFERRED?

YES

END

# FIG. 7

APPARATUS
760

INPUT COMPONENT 765

OUTPUT COMPONENT 766

COMMUNICATION INTERFACE 767

PROCESSOR 762

MEMORY 763

STORAGE 764

768

Europäisches
Patentamt

European
Patent Office

Office européen
des brevets

## EUROPEAN SEARCH REPORT

**Application Number**

EP 25 21 4056

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TATIANA PASSALI ET AL: "Topic-Controllable Summarization: Topic-Aware Evaluation and Transformer Methods", ARXIV.ORG CORNELL UNIVERSITY LIBRARY, 201 OLIN LIBRARY CORNELL UNIVERSITY ITHACA, NY 14853, 12 April 2024 (2024-04-12), XP091726192, * section 3 * | 1-20 | INV. G06F40/284 G06F40/30 ADD. G06N3/08 |
| T | Xiong Lee ET AL: "LANGUAGE MODELING WITH FACTORIZATION MEMORY", arXiv.org, 31 October 2025 (2025-10-31), pages 1-16, XP093385706, Retrieved from the Internet: URL:https://arxiv.org/pdf/2511.00315v1 [retrieved on 2026-04-08] | | |

**TECHNICAL FIELDS SEARCHED (IPC)**

G06F
G06E
G06N

The present search report has been drawn up for all claims

| Place of search | Date of completion of the search | Examiner |
|---|---|---|
| Berlin | 9 April 2026 | Abram, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 760 586 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63730898
- US 26036525
- US 26036125